Europäisches Patentamt

European Patent Office

Office européen des brevets

(11) Numéro de publication: **0 362 073**
**A2**

## (12) DEMANDE DE BREVET EUROPEEN

(21) Numéro de dépôt: **89402679.8**

(22) Date de dépôt: **29.09.89**

(51) Int. Cl.⁵: **A61H 33/02 , F16K 15/06 , F16K 29/00**

(30) Priorité: **30.09.88 FR 8812787**

(43) Date de publication de la demande:
**04.04.90 Bulletin 90/14**

(84) Etats contractants désignés:
**AT BE CH DE ES GB GR IT LI LU NL SE**

(71) Demandeur: **TECHNIQUES ET SYSTEMES ELABORES T.S.E Société dite:**
**77bis rue Michel Ange**
**F-75016 Paris(FR)**

(72) Inventeur: **Dupont, Robert**
**7, rue Mirabeau**
**F-75016 Paris(FR)**

(74) Mandataire: **Viard, Jean**
**Cabinet VIARD 28 bis, avenue Mozart**
**F-75016 Paris(FR)**

(54) **Clapet automatique de retenue.**

(57) - Clapet notamment pour baignoire de balnéo-thalassothérapie à injection d'air du type comprenant un opercule monté sur une tige de guidage.

Selon l'invention, la tige de guidage (10) est prolongée vers le haut du corps (1,2) du clapet, sa partie supérieure (14) comprenant une encoche (15) pour l'introduction de l'extrêmité d'un tournevis.

Application : Déblocage des clapets sans démontage, par les utilisateurs.

FIG.1

EP 0 362 073 A2

## CLAPET AUTOMATIQUE DE RETENUE

La présente invention a pour objet un clapet automatique de retenue, destiné en particulier, mais non exclusivement, aux baignoires de thalasso-balnéothérapie, permettant une rétention d'eau nulle.

On connaît par FR-B-2 483 038, un clapet de retenue destiné à permettre l'injection d'air dans une baignoire, tout en interdisant la pénétration de l'eau à l'intérieur des canalisations d'arrivée d'air, un tel clapet étant monté à l'extrémité de chacune des dérivations d'arrivée d'air. Le clapet décrit dans le brevet ci-dessus se compose d'un corps muni d'un siège de clapet et d'un opercule mobile à l'intérieur du corps, guidé par une tige solidaire de l'opercule, le clapet étant constitué par un disque pourvu d'une gorge périphérique recevant un joint torique d'étanchéité s'adaptant sur le siège. La tige de clapet est mobile en translation à l'intérieur d'une bague dans laquelle sont prévus des orifices permettant l'écoulement de l'air à travers le clapet.

EP-A-0313 488 décrit un dispositif de fixation d'un clapet anti-retour dont la fixation est effectuée par collage sous la baignoire en matière plastique.

FR-A- 967 496 décrit une soupape à ressort dont le déblocage exige un démontage ce qui est pratiquement impossible au-dessous d'une baignoire.

En balnéothérapie, le traitement thérapeutique nécessite, dans certains cas, l'addition dans l'eau d'adjuvants plus ou moins granuleux. Le clapet mentionné ci-dessus fonctionne très convenablement dans la mesure où l'air chasse du siège ou du joint toutes les impuretés qui pourraient se déposer. Il arrive néanmoins que ces impuretés provoquent un blocage du clapet soit sur son siège, soit en position plus ou moins ouverte. A ce moment, il est nécessaire de démonter le clapet, dont le corps se trouve vissé au-dessous de la baignoire, dans des endroits difficilement accessibles. Outre ce problème particulier, le blocage des clapets de soupapes automatiques est très général et l'invention n'est en aucun cas limitée à cette application particulière.

La présente invention a pour objet de pallier cet inconvénient et de permettre un déblocage de l'obturateur du clapet sans avoir à démonter le corps de celui-ci et sans accès toujours difficile et parfois impossible sous la baignoire.

Selon la présente invention, le clapet automatique de retenue, comprenant un obturateur mobile solidaire d'une tige coulissant dans un support fixe, est caractérisé en ce que ladite tige de guidage fait saillie à la partie supérieure du support dans les deux positions d'ouverture et de fermeture.

Ainsi, il est possible d'avoir accès par un moyen quelconque à cette tige, et par application d'une pression, de la débloquer en cas de mauvais fonctionnement.

La présente invention peut s'appliquer à tout type de clapet existant, à condition de rallonger la tige de guidage de l'obturateur et de prévoir au moins une fente à la partie supérieure de la tige.

Selon une autre caractéristique de l'invention, la partie supérieure de la tige de guidage de l'obturateur présente une fente permettant l'insertion d'un tournevis. Dans ces conditions, il est aisé de passer un petit tournevis à l'intérieur du corps du clapet et de faire tourner l'obturateur de manière à dégager les impuretés ayant provoqué le blocage.

D'autres caractéristiques et avantages de l'invention apparaîtront au cours de la description qui va suivre d'un mode particulier de réalisation, donné uniquement à titre d'exemple non limitatif, en regard des dessins qui représentent :

- la figure 1, une vue en coupe verticale d'un clapet en position fermée ;
- la figure 2, une vue également en coupe, du même clapet en position ouverte.

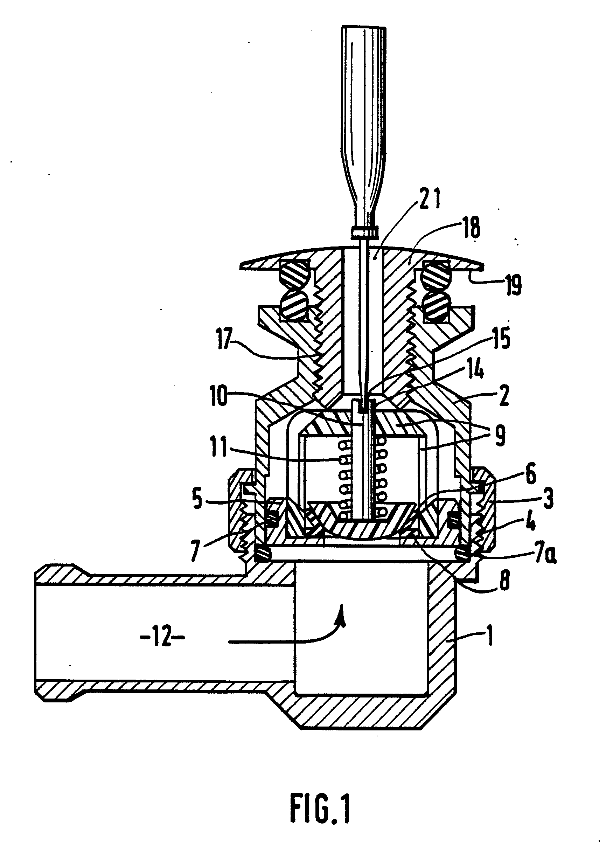

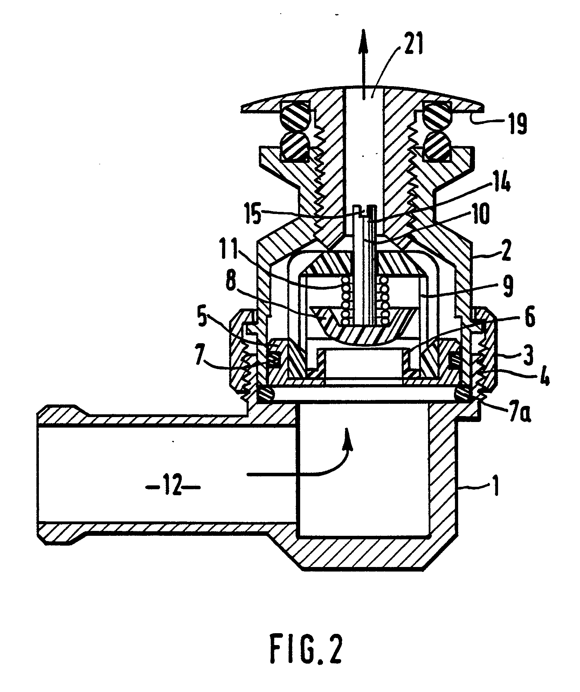

Le clapet automatique particulier qui est représenté sur les figures 1 et 2, est plus spécialement destiné à être monté sur des baignoires de balnéothérapie à injection d'air, l'air entrant par le bas du clapet et sortant par le haut, l'ouverture du haut du clapet pouvant être immergée dans un liquide tel que de l'eau contenant des adjuvants.

Sur les figures, le clapet se compose d'un corps réalisé en deux parties 1 et 2, chacune des parties présentant, respectivement, un conduit 12 d'entrée du fluide, et un conduit 21 de sortie du fluide. Ces deux parties s'assemblent par exemple par vissage d'une bague extérieure 3 sur un filetage 4. Entre les parties 1 et 2, est disposée une bague intérieure 5. La bague 5 présente, à sa partie inférieure, une gorge dans laquelle est logé un joint 7 destiné à assurer l'étanchéité entre les parties 1 et 2 du corps. Un second joint 7a assure également l'étanchéité de l'assemblage 1 et 2.

La partie supérieure interne de la bague 5 forme un siège de clapet 6 qui, dans l'exemple représenté, est à section sphérique. A l'intérieur de la partie centrale de la bague 5 se trouve un support de guidage 9 à l'intérieur duquel est montée librement mobile en translation, une tige de guidage 10 rappelée en position de fermeture par un ressort calibré 11. Comme représenté sur la figure 1, lorsque le clapet est en position fermée, le joint 8 vient s'écraser contre le siège 6 de la bague 5. Par contre, en position ouverte, et comme représenté sur la figure 2, le joint 8 est dégagé du siège 6. La tige 10 présente une partie supérieure 14.

Selon la présente invention, la partie supérieure 14 de la tige 10 fait saillie au-dessus du support 9 quelle que soit la position ouverte ou fermée du clapet. Cette partie 14 présente une fente 15, ou éventuellement une incision en croix, permettant, comme celà sera expliqué ci-après, l'introduction d'un tournevis.

Le ressort 11 prend appui contre la partie centrale de la bague 9. De préférence, la partie 2 présente, à sa partie supérieure, à l'intérieur de l'orifice du passage 21, un filetage 17 permettant de visser sur le clapet un injecteur 18 prenant appui par sa collerette 19 sur le fond de la baignoire, l'étanchéité étant assurée par deux joints (non référencés), ou tout autre organe utile.

Au repos, l'obturateur 8 occupe la position représentée sur la figure 1. Il est appliqué contre le siège 6, soit par l'action de la force de rappel du ressort 11, soit, lorsque la baignoire est remplie d'eau, par l'influence conjuguée de la pression d'eau et du ressort de rappel 11. Par contre, lorsqu'un fluide sous pression, tel que de l'air, est appliqué par la canalisation d'entrée 12, l'obturateur 8 se soulève et permet le passage de l'air à travers les ouvertures du support 9. Cet air chasse l'eau se trouvant dans le corps 1, 2, du clapet, et produit son action à l'intérieur de l'eau se trouvant dans la baignoire. Lorsque l'introduction du fluide sous pression dans la canalisation 12 est interrompue, l'opercule 8 redescend progressivement sous l'influence du ressort de rappel 11 et s'applique contre la bague 5. Il repousse ainsi les impuretés qui auraient pu se déposer sur ce siège. Cette fermeture du clapet empêche toute introduction d'eau dans la canalisation 12. Par contre, il peut arriver que l'obturateur 8 reste collé sur le siège. Il peut également arriver que des impuretés véhiculées par l'air s'accumulent à l'intérieur de l'orifice de guidage de la tige formé dans la partie centrale du support 9. Ainsi, bien que celà soit très rare, l'obturateur 8 peut se trouver bloqué dans une position quelconque, ce qui interdit son fonctionnement. L'utilisateur peut alors directement, et sans avoir recours à un spécialiste, procéder au déblocage de l'obturateur en faisant passer un tournevis de petite dimension à l'intérieur du conduit 21. L'extrémité avant du tournevis pénètre dans la fente 15, et l'utilisateur peut soit appuyer, soit faire tourner la tige 10 de manière à provoquer le déblocage qui ne résulte souvent que de la présence d'une impureté.

Il va de soi que de nombreuses variantes peuvent être introduites, notamment par substitution de moyens techniquement équivalents sans pour autant sortir du cadre de l'invention.

**Revendications**

1. Clapet automatique unidirectionnel comprenant un corps de clapet muni d'un conduit d'entrée et d'un conduit de sortie, un opercule (8) mobile à l'intérieur du corps de clapet (1, 2), guidé par une tige de guidage (10) et un siège (6) pour l'opercule (8) formé dans une bague (5), la tige de guidage (10) coulissant à l'intérieur d'un support (9), caractérisé en ce que la tige de guidage (10), solidaire de l'opercule (8), traverse le support (9) et fait saillie à sa surface supérieure quelle que soit la position du clapet.

2. Clapet selon la revendication 1, caractérisé en ce que l'extrémité (14) de la tige de guidage (10) présente au moins une fente diamétrale (15).

3. Clapet selon l'une des revendications 1 ou 2, caractérisé en ce que le corps de clapet est constitué de deux parties (1, 2) démontables.

4. Clapet selon l'une quelconque des revendications précédentes, caractérisé en ce qu'un ressort de rappel (11) est monté entre l'obturateur (8) et la partie supérieure du support (9).

5. Clapet selon l'une quelconque des revendications précédentes, caractérisé en ce qu'un injecteur d'air (18) est monté à la partie supérieure du clapet.

6. Baignoire de balnéo ou de thalassothérapie, caractérisée en ce qu'elle comprend au moins un ensemble clapet-injecteur selon l'une quelconque des revendications précédentes.

FIG.1

FIG.2